# EUROPEAN PATENT APPLICATION

(11) **EP 4 328 503 A1**
(43) Date of publication of application: **28.02.2024**
(21) Application number: 22791652.5
(22) Date of filing: 12.04.2022
(51) Int. Cl.: F24F 7/08, F24F 13/20, F28F 3/08

(54) **AIR TREATMENT DEVICE**

(30) Priority: 18.04.2021 CN 202110415448
(71) Applicant: DAIKIN INDUSTRIES, LTD., Osaka 530-0001 (JP)
(72) Inventor: WANG, Meiling, Shanghai, 201108 (CN); WANG, Zheyuan, Shanghai, 201108 (CN); LIU, Lulu, Shanghai, 201108 (CN)
(74) Representative: Hoffmann Eitle
(86) International application number: PCT/JP2022/017600
(87) International publication number: WO 2022/224878

(57) **Abstract**

An air treatment device achieves even distribution of flow speed of air flowing out of a heat exchanger in a height direction of a case, to entirely improve heat exchange performance. An air treatment device (100) includes a case (10) having a fresh air port, a supply air port, a return air port, and an exhaust air port. The case is provided with a heat exchanger (40) including multiple layers of heat exchange core fins and multiple layers of films stacked alternately, and the films adjacent to each other interpose an air flow passage allowing air to flow therethrough. A section perpendicular to an air flow direction of an air flow path in the case and upstream of the heat exchanger includes a first region (Q1) having high air flow speed and a second region (Q2) having low air flow speed. Assuming that, in the heat exchanger, the films adjacent to each other have a gap H1 in a region corresponding to the first region and the films adjacent to each other have a distance H2 in a region corresponding to the second region, H1 < H2 is satisfied.

## Description

### TECHNICAL FIELD

The present invention relates to a technical field on air treatment, and particularly relates to a heat exchanger in an air treatment device.

### BACKGROUND ART

There has conventionally been known an air treatment device including a case having a fresh air port, a supply air port, a return air port, and an exhaust air port. The case is provided therein with a supply air route from the fresh air port to the supply air port, and an exhaust air route from the return air port to the exhaust air port. A fan is provided downstream of each of the supply air route and the exhaust air route. When the fan is driven to rotate, due to negative pressure generated by the fan, outdoor air is sucked into the case via the fresh air port on the supply air route, and the outdoor air exchanges heat in the heat exchanger and then flows into indoors via the supply air port. The air passing the fresh air port receives large resistance from an edge of the fresh air port, and thus has a flow reduced in flow speed at each end in a height direction of the case. The air entering via the fresh air port accordingly has high flow speed at a center in the height direction of the case, and has low flow speed at each of the ends in the height direction of the case.

When the air passes the heat exchanger, flow speed distribution in an air passage is more uneven due to change in flow direction, pressure loss in the heat exchanger, and the like. This affects heat exchange performance of the entire air treatment device.

The air treatment device often needs to be attached in a small attachment space upon actual application, and thus needs to be entirely downsized. This shortens a flow route for air in the air treatment device before entering the heat exchanger. Air sucked via the fresh air port or the return air port then enters the heat exchanger without evenly diffused, and air flowing out of the heat exchanger is also uneven.

### SUMMARY OF THE INVENTION

### <Technical Problem>

The present invention has been achieved in view of the above technical problems, and an object thereof is to provide an air treatment device achieving even distribution of flow speed of air flowing out of a heat exchanger in a height direction of a case, to improve heat exchange performance of the entire air treatment device.

### <Solution to Problem>

In order to achieve the object mentioned above, the present invention provides, in accordance with a first aspect, an air treatment device including a case having a fresh air port, a supply air port, a return air port, and an exhaust air port, the case provided therein with a supply air route from the fresh air port to the supply air port, and an exhaust air route from the return air port to the exhaust air port, the supply air route and the exhaust air route each provided with a fan, the case accommodating a heat exchanger configured to cause heat exchange between air flowing in the supply air route and air flowing in the exhaust air route, the heat exchanger including multiple layers of heat exchange core fins and multiple layers of films stacked alternately, and the films adjacent to each other interposing an air flow passage allowing air to flow therethrough, in which a section perpendicular to an air flow direction of an air flow path in the case and upstream of the heat exchanger includes a first region and a second region, the first region is higher in air flow speed than the second region, and assuming that, in the heat exchanger, the films adjacent to each other have a gap H1 in a region corresponding to the first region and the films adjacent to each other have a distance H2 in a region corresponding to the second region, H1 < H2 is satisfied.

In the above configuration, the section perpendicular to the air flow direction of the air flow path an upstream of the heat exchanger includes the first region having high air flow speed and the second region having low air flow speed. Accordingly, in the heat exchanger, the gap H1 between the adjacent films in the region corresponding to the first region is set to be less than the gap H2 between the adjacent films in the region corresponding to the second region. Resistance received by the air having high flow speed in the heat exchanger can thus be made larger than resistance received by the air having low flow speed in the heat exchanger. Accordingly, pressure loss generated by the air in the first region passing the heat exchanger can be made larger than pressure loss generated by the air in the second region passing the heat exchanger. This achieves even flow speed distribution in a height direction of the case after the air in the first region and air in the second region flow in the heat exchanger. Because the adjacent films in the region corresponding to the first region have the small gap H1, air between the adjacent air flow passages achieves sufficient heat exchange, to help improvement in heat exchange efficiency of the entire heat exchanger. Increase in pressure loss of air in the heat exchanger corresponding to the first region deceases air travel speed in the heat exchanger to extend heat exchange time in the heat exchanger, to enable more sufficient heat exchange between air and the heat exchange core fins. Because the adjacent films in the region corresponding to the second region have the large gap H2, pressure loss of air in the heat exchanger corresponding to the second region is decreased to increase air travel speed in the heat exchanger, to achieve improvement in heat exchange efficiency. This achieves even heat exchange in the in the entire heat exchanger as well as improvement in heat exchange efficiency.

An air treatment device according to a second aspect of the present invention is the air treatment device according to the first aspect of the present invention, in which the first region and the second region are stacked in a first direction.

In the above configuration, the first region and the second region are stacked in the first direction to facilitate regulation of air flow speed distribution in the first direction (i.e. a stacking direction), even flow speed distribution of air flowing out of the heat exchanger, and further improvement in heat exchange efficiency.

An air treatment device according to a third aspect of the present invention is the air treatment device according to the second aspect of the present invention, in which the first region is located at a center in the first direction, and the second region is located at each end in the first direction, or the first region is located at each of the ends in the first direction, and the second region is located at the center in the first direction.

In the above configuration, by setting the region at the center in the first direction as the first region and the region at each of the ends in the first direction as the second region, or setting the region at each of the ends in the first direction as the first direction and the region at the center in the first direction as the second direction, air flow speed distribution in the first direction can be clearly sectioned, to facilitate specification of the gap between the adjacent films in the heat exchanger corresponding to the first region and the second region.

An air treatment device according to a fourth aspect of the present invention is the air treatment device according to the second aspect of the present invention, in which heat exchange core fins corresponding to the first region are combined to form a first core fin group, heat exchange core fins corresponding to the second region are combined to form a second core fin group, the first core fin group has stacking thickness substantially equal to height in the first direction of the first region, and the second core fin group has stacking thickness substantially equal to height in the first direction of the second region.

In the above configuration, the heat exchange core fins corresponding to the first region are combined to form the first core fin group, the heat exchange core fins corresponding to the second region are combined to form the second core fin group, the first core fin group has stacking thickness substantially equal to height in the first direction of the first region, and the second core fin group has stacking thickness substantially equal to height in the first direction of the second region, to achieve reliable regulation of flow speed distribution of air from the first region and air from the second region, and facilitate assembly with adopting structures of the core fin groups.

An air treatment device according to a fifth aspect of the present invention is the air treatment device according to the second aspect of the present invention, in which the section perpendicular to the air flow direction of the air flow path in the case and upstream of the heat exchanger further includes a third region different in air flow speed from the first region and the second region, and assuming that the films adjacent to each other have a gap H3 in a region corresponding to the third region in the heat exchanger, H1 < H3 < H2 is satisfied.

In the above configuration, the section perpendicular to the air flow direction of the air flow path in the case and upstream of the heat exchanger further includes the third region different in air flow speed from the first region and the second region, and assuming that, in the heat exchanger, the films adj acent to each other have the gap H3 in the region corresponding to the third region, H1 < H3 < H2 is satisfied. The air flow path can thus be divided into smaller regions, to further help equalizing air flow speed distribution in the section perpendicular to the air flow direction and downstream of the heat exchanger.

An air treatment device according to a sixth aspect of the present invention is the air treatment device according to the fifth aspect of the present invention, in which heat exchange core fins corresponding to the first region are combined to form a first core fin group, heat exchange core fins corresponding to the second region are combined to form a second core fin group, heat exchange core fins corresponding to the third region are combined to form a third core fin group, and the third core fin group is provided between the first core fin group and the second core fin group in the first direction.

In the above configuration, the heat exchange core fins corresponding to the first region are combined to form the first core fin group, the heat exchange core fins corresponding to the second region are combined to form the second core fin group, the heat exchange core fins corresponding to the third region are combined to form the third core fin group, and the third core fin group is provided between the first core fin group and the second core fin group in the first direction. Provision of the core fin groups in accordance with further division of the air flow distribution area in comparison to the case where the two core fin groups are provided helps further equalizing flow speed distribution in the first direction of air flowing out of the heat exchanger.

An air treatment device according to a seventh aspect of the present invention is the air treatment device according to the second aspect of the present invention, in which the heat exchanger has a plurality of branch flow passages provided between the films adjacent to each other and allowing air to flow therethrough, and assuming that the branch flow passage corresponding to the first region has a length W1 in a second direction perpendicular to the first direction, and the branch flow passage corresponding to the second region has a length W2 in the second direction, W1 < W2 is satisfied.

In the above configuration, the branch flow passages corresponding to the first region has the small length W1 in the second direction, to increase pressure loss of air in the branch flow passages. This decreases air travel speed in the branch flow passages, and extends heat exchange time of the air in the branch flow passages, to achieve sufficient heat exchange between air and the heat exchange core fins. The branch flow passages corresponding to the second region has the large length W2 in the second direction, to decrease pressure loss of air in the branch flow passages. This increases air speed in the branch flow passages, and increases heat exchange quantity per unit time between air and the heat exchange core fins, to achieve sufficient heat exchange between air and the heat exchange core fins.

It is thus possible to equalize air flow speed distribution in the second direction after heat exchange in the heat exchanger, as well as improve heat exchange efficiency of the entire heat exchanger.

An air treatment device according to an eighth aspect of the present invention is the air treatment device according to any one of the first to seventh aspects of the present invention, in which assuming that the supply air route has a portion provided downstream of the heat exchanger and having a length L1 in an air flow direction, and a portion provided upstream of the heat exchanger and having a length L2 in the air flow direction, L1 > L2 is satisfied.

In the above configuration, assuming that the supply air route has the portion provided downstream of the heat exchanger and having the length L1 in the air flow direction, and the portion provided upstream of the heat exchanger and having the length L2 in the air flow direction, L1 > L2 is satisfied to achieve more equalized air diffusion after heat exchange in the heat exchanger, as well as help downsizing of the entire device through provision of a space for an L filter.

An air treatment device according to a ninth aspect of the present invention is the air treatment device according to the second aspect of the present invention, in which heat exchange core fins corresponding to the first region are combined to form a first core fin group, heat exchange core fins corresponding to the second region are combined to form a second core fin group, assuming that predetermined average supply air volume q1 is set in accordance with desired air treatment performance, the fan actually has average supply air volume q2, the first core fin group in the heat exchanger has a length H1 in the first direction, and the second core fin group has a length H2 in the first direction, H2 > H1 is satisfied when q1 > q2 is established, and H2 ≤ H1 is satisfied when q1 < q2 is established.

In the above configuration, the heat exchange core fins corresponding to the first region are combined to form the first core fin group, the heat exchange core fins corresponding to the second region are combined to form the second core fin group. Assume that the predetermined average supply air volume q1 is set in accordance with the desired air treatment performance, the fan actually has the average supply air volume q2, the first core fin group in the heat exchanger has the length H1 in the first direction, and the second core fin group has the length H2 in the first direction, the heat exchanger itself has large pressure loss in a case where q1 > q2 is established. Increasing the numbers of layers of the heat exchange core fins and the films in the first core fin group having the gap H2 in the heat exchanger leads to decrease in pressure loss of air passing the heat exchanger and more sufficient heat exchange. The heat exchanger itself has small pressure loss in another case where q1 < q2 is established. Increasing the numbers of layers of the heat exchange core fins and the films in the first core fin group having the gap H1 in the heat exchanger leads to increase in pressure loss of air passing the heat exchanger. Accordingly, rationally setting the gap between the adj acent films in the heat exchanger achieves desired air treatment performance.

An air treatment device according to a tenth aspect of the present invention is the air treatment device according to the ninth aspect of the present invention, in which assuming that the length in the first direction of the first core fin group and the length in the first direction of the second core fin group calculated in accordance with the predetermined average supply air volume q1 and a heat exchange area of the heat exchanger have an average value H, H = (H1 + H2)/2 is satisfied.

In the above configuration, rationally setting the gap between the adjacent films in the heat exchanger so as to satisfy H = (H1 + H2)/2 enables more equalized flow speed distribution of air flows from the heat exchanger. This achieves improvement in heat exchange performance of the entire heat exchanger, and as well as improvement in heat exchange performance of the entire air treatment device.

An air treatment device according to an eleventh aspect of the present invention is the air treatment device according to the first aspect of the present invention, in which the first region and the second region are stacked in a first direction, the first region corresponds to a position in the first direction of the fresh air port or the return air port, and the second region corresponds to a region other than the first region, on the supply air route or the exhaust air route.

In the above configuration, the first region corresponds to the position in the first direction of the fresh air port or the return air port, and the second region corresponds to the region other than the first region in the supply air route or the exhaust air route, to rationally provide the first core fin group and the second core fin group in accordance with the position of the fresh air port or the return air port for more equalized heat exchange in the entire heat exchanger.

An air treatment device according to a twelfth aspect of the present invention is the air treatment device according to the first aspect of the present invention, in which the second region corresponds to a position in a first direction of a volute of the fan, and the first region corresponds to a region other than the second region, on the supply air route or the exhaust air route.

In the above configuration, the second region corresponds to the position in the first direction provided with the volute of the fan, and the first region corresponds to the region other than the second region in the supply air route or the exhaust air route, to rationally provide the first core fin group and the second core fin group in accordance with the position of the volute of the fan for more equalized heat exchange in the entire heat exchanger.

### BRIEF DESCRIPTION OF THE DRAWINGS

FIG. 1 is a pattern view depicting a schematic structure of an air treatment device according to an embodiment of the present invention.
FIG. 2 is a pattern view depicting distribution of regions in a section perpendicular to an air flow direction in an air flow path at a fresh air port in the air treatment device depicted in FIG. 1, and corresponding distribution of core fin groups in a heat exchanger.
FIG. 3 is a pattern view depicting a detailed structure in the heat exchanger.
FIG. 4 is a pattern view depicting distribution of regions in a section perpendicular to an air flow direction in an air flow path at a fresh air port in an air treatment device according to a modification example of the embodiment of the present invention, and corresponding distribution of core fin groups in a heat exchanger.

### DESCRIPTION OF EMBODIMENTS

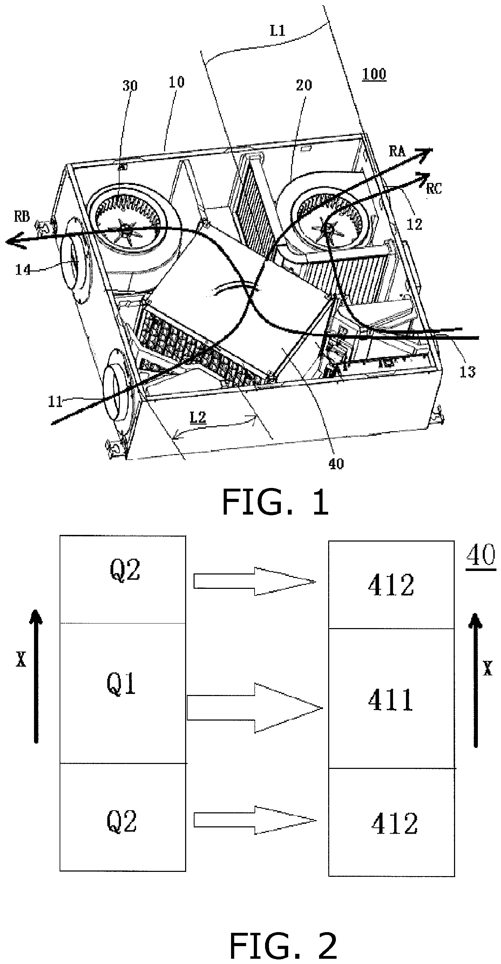

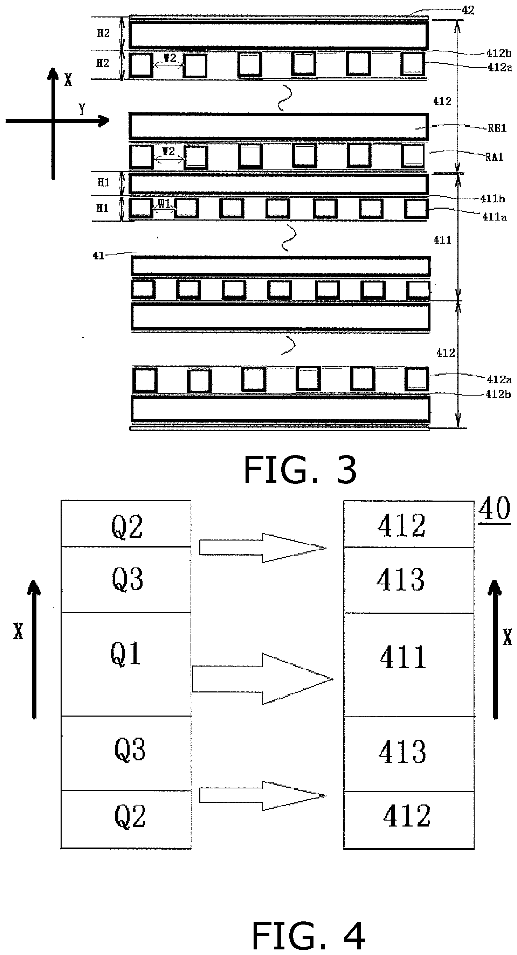

An air treatment device according to each of an embodiment and a modification example of the present invention will be hereinafter described with reference to FIG. 1 to FIG. 4. FIG. 1 is a pattern view depicting a schematic structure of an air treatment device according to the embodiment of the present invention. FIG. 2 is a pattern view depicting distribution of regions in a section perpendicular to an air flow direction in an air flow path at a fresh air port in the air treatment device depicted in FIG. 1, and corresponding distribution of core fin groups in a heat exchanger. FIG. 3 is a pattern view depicting a detailed structure in the heat exchanger. FIG. 4 is a pattern view depicting distribution of regions in a section perpendicular to an air flow direction in an air flow path at a fresh air port in an air treatment device according to a modification example of the embodiment of the present invention, and corresponding distribution of core fin groups in a heat exchanger.

### <Embodiment>

As depicted in FIG. 1, an air treatment device 100 includes a case 10 having a fresh air port 11, a supply air port 12, a return air port 13, and an exhaust air port 14. The case 10 is provided therein with a supply air route RA from the fresh air port 11 to the supply air port 12, and an exhaust air route RB from the return air port 13 to the exhaust air port 14. The supply air route RA and the exhaust air route RB are provided with a fresh air fan 20 and an exhaust air fan 30, respectively. The fresh air port 11 and the supply air port 12 are positioned at opposite corners of the case 10, and the return air port 13 and the exhaust air port 14 are positioned at opposite corners of the case 10. The supply air route RA and the exhaust air route RB cross each other at a position provided with a heat exchanger 40 configured to cause heat exchange between air flowing in the supply air route RA and air flowing in the exhaust air route RB. As depicted in FIG. 1, the case 10 is further provided therein with an internal circulation route RC from the return air port 13 to the supply air port 12.

The air treatment device 100 thus configured has a fresh air mode where, as indicated by arrow RA, fresh air entering from outdoors via the fresh air port 11 exchanges heat in the heat exchanger 40 and then flows through the fresh air fan 20 to be eventually sent indoors via the supply air port 12, a return air mode where, as indicated by arrow RB, indoor air enters the heat exchanger 40 via the return air port 13 and exchanges heat and then flows through the exhaust air fan 30 to be eventually sent out via the exhaust air port 14, and an internal circulation mode where, as indicated by arrow RC, indoor air enters the case via the return air port 13, and directly flows through the fresh air fan 20 without passing the heat exchanger 40 to be eventually sent indoors via the supply air port 12.

The air treatment device 100 in the above described three modes achieves indoor air treatment with use of outdoor air as well as air treatment with direct use of indoor air.

FIG. 2 schematically depicts as a block, for easier comprehension, a section perpendicular to an air flow direction of an air flow path adjacent to the fresh air port 11. Assume that the block has a long side direction corresponding to a first direction X, a first region Q1 is positioned substantially at a center in the first direction X, a second region Q2 is positioned at each end in the first direction X. The first region Q1 is higher in air flow speed than the second region Q2.

The heat exchanger 40 according to the present embodiment includes a heat exchange core 41 and a lid plate 42. The heat exchange core 41 is constituted by multiple layers of heat exchange core fins and multiple layers of films alternately stacked in the first direction X. The heat exchange core 41 is herein principally constituted by paper produced with use of dedicated fibers through a special process. Such paper has high moisture permeability and high airtightness, and is characterized by tearing resistance, aging resistance, and fungiproofness. The fibers are disposed with small gaps to allow passage of only water vapor molecules having small particle size, to achieve total heat exchange of the heat exchange core 41.

As depicted in FIG. 2, the heat exchange core 41 is divided into a second core fin group 412, a first core fin group 411, and another second core fin group 412 in the first direction X. The supply air route RA and the exhaust air route RB cross while being apart from each other at the heat exchanger 40 according to the present embodiment, to achieve sufficient heat exchange between air in a supply air passage RA1 and air in an exhaust air passage RB1.

As depicted in FIG. 3, the first core fin group 411 is formed by multiple layers of first core fins 411a and multiple layers of first films 411b alternately stacked in the first direction X. One of the first films 411b and adjacent one of the first films 411b interpose the supply air passage RA1 allowing air in the supply air route RA to flow therethrough and the exhaust air passage RB1 allowing air in the exhaust air route RB to flow therethrough. Both the supply air passages RA1 and the exhaust air passages RB1 in the first core fin group 411 have gaps H1.

The second core fin group 412 is formed by multiple layers of second core fins 412a and multiple layers of second films 412b alternately stacked in the first direction X. One of the second films 412b and adjacent one of the second films 412b also interpose the supply air passage RA1 allowing air in the supply air route RA to flow therethrough and the exhaust air passage RB 1 allowing air in the exhaust air route RB to flow therethrough. Both the supply air passages RA1 and the exhaust air passages RB 1 in the second core fin group 412 have gaps H2, and H1 and H2 satisfy H1 < H2.

As depicted in FIG. 2, air in the first region Q1 flows into the first core fin group 411 of the heat exchanger 40 as indicated by a corresponding hollow arrow, and air in each of the second regions Q2 flows into the second core fin group 412 of the heat exchanger 40 as indicated by a corresponding hollow arrow. The first region Q1 is substantially equal in length in the first direction X to the first core fin group 411, whereas the second region Q2 is substantially equal in length in the first direction X to the second core fin group 412.

The supply air passage RA1 and the exhaust air passage RB1 are thus partitioned in the heat exchanger 40 to achieve independent heat exchange between air in the supply air route RA and air in the exhaust air route RB. Air flowing out of the first region Q1 and having high flow speed receives resistance while passing the first core fin group 411 in the heat exchanger 40, and the resistance is larger than resistance received by air flowing out of the second region Q2 and having low flow speed while passing the second core fin group 412 in the heat exchanger 40. Accordingly, air flowing out after heat exchange in the heat exchanger 40 has even flow speed distribution in the first direction X, and air adjacent to an inlet of the heat exchanger 40 also has gradually equalized flow speed distribution in the first direction X. This achieves even heat exchange in the first direction X in the heat exchanger 40, for improvement in heat exchange performance of the entire heat exchanger 40.

As depicted in FIG. 3, in a second direction Y perpendicular to the first direction X in the heat exchanger 40, the heat exchange core fins partitions the supply air route RA1 and the exhaust air route RB1 into a plurality of branch flow passages. The branch flow passages in the first core fin group 411 each have a length W1 in the second direction Y, the branch flow passages in the second core fin group 412 each have a length W2 in the second direction Y, and W1 and W2 satisfy W1 < W2.

This configuration causes air flowing out of the first region Q1 and having high flow speed to flow into the heat exchanger 40 via the branch flow passages having narrow length in the second direction Y, as well as causes air flowing out of the second region Q2 and having low flow speed to flow into the heat exchanger 40 via the branch flow passages having wide length in the second direction Y Accordingly, resistance received in the heat exchanger 40 by the air flowing out of the first region Q1 can be made larger than resistance received in the heat exchanger 40 by the air flowing out of the second region Q2. Accordingly, air flowing out after heat exchange in the heat exchanger 40 has even flow speed distribution in the second direction Y, and air adjacent to the inlet of the heat exchanger 40 also has gradually equalized flow speed distribution in the first direction X. This achieves even heat exchange in the second direction Y in the heat exchanger 40, for improvement in heat exchange performance of the entire heat exchanger 40.

Such setting of size in both the first direction X and the second direction Y of the supply air route RA1 and the exhaust air route RB1 in the heat exchanger 40 achieves further even flow speed distribution of air flowing out after heat exchange in the heat exchanger 40. Alternatively, the size in the first direction or an X direction of the supply air route RA1 and the exhaust air route RB1 in the heat exchanger 40 can be set individually, or the size in the second direction or a Y direction of the supply air route RA1 and the exhaust air route RB1 in the heat exchanger 40 can be set individually.

Description is made to specific installation of the heat exchange core fins in the heat exchanger.

A designer typically sets predetermined average supply air volume q1 of an air treatment device, and matches a corresponding fan and a heat exchange area S of a heat exchanger in accordance with the predetermined average supply air volume q1.

Specifically, assume that a selected fan actually has average supply air volume q2. A relation q1 > q2 indicates that the heat exchanger 40 has large pressure loss. In this case, in order for decrease in pressure loss of the entire heat exchanger, the second core fin group 412 having the large gaps in the heat exchanger 40 can be increased in stacking number (i.e. sets of the second core fin 412a and the second film 412b are increased in a number m). A relation q1 < q2 indicates that the heat exchanger 40 has small pressure loss. In this case, in order to increase in pressure loss of the entire heat exchanger as well as further equalized heat exchange with air in the heat exchanger 40, the first core fin group 411 having the small gaps in the heat exchanger 40 can be increased in stacking number (i.e. combination of the first core fin 411a and the first film 411b are increased in a number n).

According to an average gap H = (mH2 + nH1)/(m + n) of the heat exchanger thus designed, the values H1 and H2 are appropriately selected to satisfy H = (H1 + H2)/2.

In a case where the present embodiment selects 2.0 mm as the value H1 and 2.6 mm as the value H2, the average gap H is (2.0 + 2.6)/2 = 2.3 mm.

Designing as described above enables sufficient heat exchange between air flowing in the first core fin group 411 and air flowing in the second core fin group 412, to equalize heat exchange in the heat exchanger and improve performance of the entire heat exchanger.

As depicted in FIG. 1, the case 10 has a limited internal space. In order to allow air obtained by heat exchange in the heat exchanger 40 to flow indoors evenly as much as possible, in the supply air route RA, a length L2 of an air flow path from the fresh air port 11 to the inlet of the heat exchanger 40 is set to be shorter than a length L1 of an air flow path from an outlet of the heat exchanger 40 to the supply air port 12. It is thus possible to cause air flowing out of the heat exchanger 40 to diffuse evenly as much as possible and then flow indoors via the supply air port 12. This achieves improvement in performance of the entire heat exchanger and then improvement in heat exchange performance of the entire air treatment device.

### <Modification example of embodiment>

As depicted in FIG. 2, according to the above embodiment, the section perpendicular to the air flow direction of the air flow path in the case 10 is divided in the first direction X into the first region Q1 having high flow speed and the second regions Q2 having low flow speed. However, the present invention is not limited to this embodiment. As depicted in FIG. 4, the section perpendicular to the air flow direction of the air flow path in the case 10 can be further divided in the first direction X into third regions Q3 having flow speed between the flow speed in the first region Q1 and the flow speed in the second region Q2.

Accordingly, in the heat exchanger 40 depicted in FIG. 4, the first core fin group 411 corresponding to the first region Q1 and each of the second core fin groups 412 corresponding to the second regions Q2 interpose a third core fin group 413.

As depicted in FIG. 4, the first region Q1 is substantially equal in length in the first direction X to the first core fin group 411, the second region Q2 is substantially equal in length in the first direction X to the second core fin group 412, and the third region Q3 is substantially equal in length in the first direction X to the third core fin group 413.

In comparison to the above embodiment, the section perpendicular to the air flow direction of the air flow path in the case 10 is further divided in the first direction X, and the heat exchange core fins in the heat exchanger 40 in the first direction X, to further equalize flow speed in the first direction X of air obtained by heat exchange in the heat exchanger 40.

Described above are the embodiment and the modification example of the present invention. In addition to the technical ideas according to the embodiment of the modification example, elements of the embodiment and the modification example can be combined to obtain additional technical ideas of the present invention without departing from the purpose of the present invention.

According to the embodiment and the modification example described above, the heat exchange core fins being stacked in the heat exchange core 41 are each made of paper. The present invention is not limited to this case. The heat exchange core 41 may alternatively be formed by stacking cores made of a material such as resin and moisture permeable films made of a high polymer material.

According to the embodiment and the modification example described above, the first region having high air flow speed is located at the center in the first direction, and the second region having low air flow speed is located at each of the ends in the first direction. The present invention is not limited to this case. Alternatively, the first region having high air flow speed may be located at each of the ends in the first direction, and the second region having low air flow speed may be located at the center in the first direction.

According to the embodiment and the modification example described above, the section perpendicular to the air flow direction of the air flow path at the fresh air port 11 is divided into the first region and the second regions, or into the first region, the second regions, and the third regions in the first direction X. The present invention is not limited to this case. Alternatively, the section may alternatively be divided into more regions.

According to the embodiment and the modification example described above, the length W1 in the second direction Y of each of the branch flow passages in the first core fin group 411 and the length W2 in the second direction Y of each of the branch flow passages in the second core fin group 412 are simply set to satisfy W1 < W2. The present invention is not limited to this case, and a length W3 in the second direction Y of each branch flow passage in the third core fin group 413 may be further set to satisfy W1 < W3 < W2.

According to the embodiment and the modification example described above, the first region corresponds to the position in the first direction of the fresh air port or the return air port. The present invention is not limited to this case, and the first region may alternatively correspond to a position in the first direction of a fan volute.

In the embodiment and the modification example described above, the heat exchange core may be assembled by combining core fin groups, may be assembled by stacking independent core fins one by one, or may be assembled by providing core fins having different gaps to be substantially equal in height to the corresponding regions.

According to the embodiment and the modification example described above, as depicted in FIG. 1, each of the fresh air fan and the exhaust air fan are disposed horizontally, the fresh air fan has a volute positioned substantially at the center in the first direction X of the case. In the supply air route entering from a suction air port of the fan and flowing out of an exhaust air port of the fan, a region corresponding to the volute of the fresh air fan is the second region having low air flow speed. and a region corresponding to a portion other than the volute of the fresh air fan is the first region having high air flow speed. The present invention is not limited to this case. Alternatively, each of the fresh air fan and the exhaust air fan may be disposed vertically. The volute of the fresh air fan may be positioned substantially at the center in the second direction Y of the case. In the supply air route entering from the suction air port of the fan and flowing out of the exhaust air port of the fan, the region corresponding to the volute of the fresh air fan may be the second region having low air flow speed, and the region corresponding to the portion other than the volute of the fresh air fan may be the first region having high air flow speed.

According to the embodiment and the modification example described above, the core fin groups in the heat exchange core are stacked in the first direction X. The present invention is not limited to this case, and the core fin groups in the heat exchange core may alternatively be stacked in the second direction Y

The embodiment and the modification example described above provides only one heat exchanger. The present invention is not limited to this case, and there may alternatively be provided a plurality of heat exchangers.

### REFERENCE SIGNS LIST

100: air treatment device
10: case
11: fresh air port
12: supply air port
13: return air port
14: exhaust air port
20: fresh air fan
30: exhaust air fan
40: heat exchanger
41: heat exchange core
411: first core fin group
411a: first core fin
411b: first film
412: second core fin group
413: third core fin group
412a: second core fin
412b: second film
42: lid plate
RA: supply air route
RB: exhaust air route
RA1: supply air passage
RB 1: exhaust air passage
RC: internal circulation route
X: first direction
Y: second direction

## Claims

1. An air treatment device comprising a case having a fresh air port, a supply air port, a return air port, and an exhaust air port, the case provided therein with a supply air route from the fresh air port to the supply air port, and an exhaust air route from the return air port to the exhaust air port, the supply air route and the exhaust air route each provided with a fan,
the case accommodating a heat exchanger configured to cause heat exchange between air flowing in the supply air route and air flowing in the exhaust air route,
the heat exchanger including multiple layers of heat exchange core fins and multiple layers of films stacked alternately, and the films adjacent to each other interposing an air flow passage allowing air to flow therethrough, wherein
a section perpendicular to an air flow direction of an air flow path in the case and upstream of the heat exchanger includes a first region and a second region, the first region is higher in air flow speed than the second region, and
assuming that, in the heat exchanger, the films adjacent to each other have a gap H1 in a region corresponding to the first region and the films adjacent to each other have a distance H2 in a region corresponding to the second region, H1 < H2 is satisfied.

2. The air treatment device according to claim 1, wherein the first region and the second region are stacked in a first direction.

3. The air treatment device according to claim 2, wherein
the first region is located at a center in the first direction, and
the second region is located at each end in the first direction, or
the first region is located at each of the ends in the first direction, and
the second region is located at the center in the first direction.

4. The air treatment device according to claim 2, wherein
heat exchange core fins corresponding to the first region are combined to form a first core fin group,
heat exchange core fins corresponding to the second region are combined to form a second core fin group,
the first core fin group has stacking thickness substantially equal to height in the first direction of the first region, and
the second core fin group has stacking thickness substantially equal to height in the first direction of the second region.

5. The air treatment device according to claim 2, wherein
the section perpendicular to the air flow direction of the air flow path in the case and upstream of the heat exchanger further includes a third region different in air flow speed from the first region and the second region, and
assuming that the films adjacent to each other have a gap H3 in a region corresponding to the third region in the heat exchanger, H1 < H3 < H2 is satisfied.

6. The air treatment device according to claim 5, wherein
heat exchange core fins corresponding to the first region are combined to form a first core fin group,
heat exchange core fins corresponding to the second region are combined to form a second core fin group,
heat exchange core fins corresponding to the third region are combined to form a third core fin group, and
the third core fin group is provided between the first core fin group and the second core fin group in the first direction.

7. The air treatment device according to claim 2, wherein
the heat exchanger has a plurality of branch flow passages provided between the films adjacent to each other and allowing air to flow therethrough, and
assuming that the branch flow passage corresponding to the first region has a length W1 in a second direction perpendicular to the first direction, and that the branch flow passage corresponding to the second region has a length W2 in the second direction, W1 < W2 is satisfied.

8. The air treatment device according to any one of claims 1 to 7, wherein assuming that the supply air route has a portion provided downstream of the heat exchanger and having a length L1 in an air flow direction, and that a portion provided upstream of the heat exchanger and having a length L2 in the air flow direction, L1 > L2 is satisfied.

9. The air treatment device according to claim 2, wherein
heat exchange core fins corresponding to the first region are combined to form a first core fin group,
heat exchange core fins corresponding to the second region are combined to form a second core fin group,
assuming that predetermined average supply air volume q1 is set in accordance with desired air treatment performance, the fan actually has average supply air volume q2, the first core fin group in the heat exchanger has a length H1 in the first direction, and the second core fin group has a length H2 in the first direction, H2 > H1 is satisfied when q1 > q2 is established, and H2 ≤ H1 is satisfied when q1 < q2 is established.

10. The air treatment device according to claim 9, wherein assuming that the length in the first direction of the first core fin group and the length in the first direction of the second core fin group calculated in accordance with the predetermined average supply air volume q1 and a heat exchange area S of the heat exchanger have an average value H, H = (H1 + H2)/2 is satisfied.

11. The air treatment device according to claim 1, wherein
the first region and the second region are stacked in a first direction,
the first region corresponds to a position in the first direction of the fresh air port or the return air port, and
the second region corresponds to a region other than the first region, on the supply air route or the exhaust air route.

12. The air treatment device according to claim 1, wherein
the second region corresponds to a position in a first direction of a volute of the fan, and
the first region corresponds to a region other than the second region, on the supply air route or the exhaust air route.
